# EUROPEAN PATENT SPECIFICATION

(11) **EP 3 705 525 B1**
(45) Date of publication and mention of the grant of the patent: **22.10.2025**
(21) Application number: 19875628.0
(22) Date of filing: 09.09.2019
(51) Int. Cl.: C08L 67/02, C08L 67/00, C08K 5/12, C08K 5/13, C08K 5/18, B29C 48/19, G02B 6/44, B29C 48/00, B29C 48/09, B29C 48/49

(54) **MICRO-BEAM TUBE FOR CABLES AND CABLE COMPRISING MICRO-BEAM TUBE**
MIKROSTRAHLRÖHRE FÜR KABEL UND KABEL MIT MIKROSTAHLRÖHRE
TUBE À MICROFAISCEAU POUR CÂBLES ET CÂBLE COMPRENANT UN TUBE À MICROFAISCEAU

(30) Priority: 22.10.2018 CN 201811231561
(43) Date of publication of application: 09.09.2020
(73) Proprietor: Jiangsu Hengtong Optic-Electric Co. Ltd., Suzhou, Jiangsu 215200 (CN)
(72) Inventor: SUN, Lihua, Suzhou, Jiangsu 215200 (CN); WANG, Rui, Suzhou, Jiangsu 215200 (CN); FENG, Min, Suzhou, Jiangsu 215200 (CN); WU, Jie, Suzhou, Jiangsu 215200 (CN); NIE, Zhen, Suzhou, Jiangsu 215200 (CN); ZHU, Congwei, Suzhou, Jiangsu 215200 (CN); ZHANG, Wenmei, Suzhou, Jiangsu 215200 (CN); ZHANG, Yu, Suzhou, Jiangsu 215200 (CN); WANG, Tingting, Suzhou, Jiangsu 215200 (CN); QIAN, Yichao, Suzhou, Jiangsu 215200 (CN)
(74) Representative: Chung, Hoi Kan
(86) International application number: PCT/CN2019/104907
(87) International publication number: WO 2020/082919

(56) References cited:
- CN-A- 105 044 870
- CN-A- 105 278 066
- CN-A- 107 329 223
- CN-A- 108 646 369
- CN-A- 108 681 014
- CN-A- 109 385 052
- CN-U- 203 909 357
- CN-U- 207 867 083
- CN-U- 208 818 882
- JP-A- 2016 040 563
- US-A1- 2002 001 440
- US-A1- 2009 096 126
- US-B1- 6 262 185

## Description

### FIELD OF THE INVENTION

The invention relates to the field of cable technology, particularly to a micro-bundle tube of a cable, as well as a cable using the micro-bundle tube.

### DESCRIPTION OF THE RELATED ART

With the change of development trend, the optical cables are gradually running toward miniaturization and simplification, and access aerial optical cables have become one important part of cables. A traditional aerial optic cable applies a layer-stranded structure with a sleeve of PBT material. It has the advantages of large core number, large spans and large tension and others, and has a stable product performance, which makes it suitable for the fields of trunk lines, power pole towers and so on. However, it cannot be applied to rural areas such as towns and villages, where the terrain is complicated and large spans have many potential risks, thereby the pole towers with small spans are required. Small sized optical cables with small tension and short spans that can be laid overhead are needed between the "Direct-to-home" direct broadcasting satellites. The existing miniaturized aerial optical cables use PBT sleeves, PBT sleeves have high strength and hardness, thus they are difficult to be striped to realize quick stripping. Further, they have poor bending performance and large bending radius, which make it hard to wind at a connector box. In order to solve these technical problems, the micro-bundle tubes made of thermoplastic elastomer materials such as TPEE or TPU are tried to use in the industries. The TPEE or TPU micro-bundle tubes have large flexibility and easy to be peeled off, which can achieve the purpose of rapid stripping and rapid connection. However, the TPEE or TPU micro-bundle tubes have low strength, which is disadvantageous in terms of the service life of the optical cables under special surroundings. In another aspect, the TPEE micro-bundle tubes currently are prone to casting during extrusion, which can easily cause bulging, rough surface or even cracks of the micro-bundle tubes. The is mainly due to speed differences between melts, the precipitating and accumulating of the additives at the outlet of the mould, which can cause rupture of the tube wall in severe cases.

CN 108 646 369 discloses an easy-to-strip layer stranded high-density fiber bundle air-blowing micro-cable. The micro-cable comprises a central reinforcing piece, and a loose sleeve and a filling rope are stranded on the outer surface of the central reinforcing piece; an optical fiber unit and a first water blocking substance are arranged in the loose sleeve, and the optical fiber unit is a fiber bundle; the first water blocking substance is water blocking fiber paste, and a second water blocking substance is further stranded on the outer surface of the central reinforcing piece; a water blocking strip wraps the outer surface of the stranded loose sleeve and the filling rope, and the surface of the water blocking strip is coated with a sheath; a tearing rope is further arranged between the water blocking strip and the sheath, and the loose sleeve is made of TPEE. According to the micro-cable, an optical fiber can be stripped from the loose sleeve through a fingernail with bare hand, the effect of fast construction is achieved, and damage to the optical fiber is avoided.

CN 207 867 083 U provides a full dry type optical cable and system thereof. A full dry type optical cable, includes a cable core and sets up in the outer over sheath of a cable core, and the cable core is including modified polybutylene terephthalate pine sleeve pipe, the reinforcement and the area that blocks water, and the reinforcement sets up in the center of cable core, and modified polybutylene terephthalate pine sleeve pipe sets up in the periphery of reinforcement, blocks water to take the loose sleeve pipe of coating modification polybutylene terephthalate.

CN 108 681 014 A discloses a lateral pressure resistant zoom-out optical cable which comprises an outer sheath, at least one loosened tube and an optical fiber, wherein the loosened tube is filled with the optical fiber; the loosened tube is made of the following formula of raw materials: 80-120 parts of PBT (Polybutylene Terephthalate), 25-40 parts of PU (Polyurethane), 40-80 parts of LLDPE-g-GMA (Linear Low Density Polyethylene-g-Glycidyl Methacrylate), 1-3 parts of modified nano graphite pieces and 2-8 parts of a short-cut carbon fiber, wherein the diameter of the modified nano graphite pieces is 60-150nm, and the thickness of the modified nano graphite pieces is 2.5-8nm; the length of the short-cut carbon fiber is 2-15mu m, and the length-diameter ratio of the short-cut carbon fiber is 10-30.

US 6 262 185 B1 relates to the use of thermoplastic polyester molding compounds, containing A) 80 to 100 wt. % of a polyalkylene arylate, especially polybutylene terephthalate, with a half-width of crystallization heat releases of <=5° C. and B) 0 to 20 wt. % of other additives, the weight percentages of constituents A) and B) adding up to 100%, for producing molded bodies by blow-molding, profile extrusion and/or pipe extrusion.

US 2002/001440 A1 relates to a telecommunications cable module comprising at least one optical fiber surrounded by a protective skin of a thermoplastic elastomer having flexible diol segments, and in particular a polyester thermoplastic elastomer. In the invention, the thermoplastic elastomer having flexible diol segments presents a melting point greater than 130° C. and an initial resistance to tearing less than 60 kN/m. The material proposed by the invention is easily applied to fibers, in particular by extrusion.

CN 107 329 223 A provides a full-dry optical cable and a system thereof and relates to the technical field of optical cable communication. The full-dry optical cable comprises a cable core and an outer sheath arranged on the outer layer of the cable core; the cable core comprises a modified polybutylene terephthalate loose tube, a reinforcing part and a water-blocking tape, wherein the reinforcing part is arranged in the center of the cable core, and the modified polybutylene terephthalate loose tube is arranged on the periphery of the reinforcing part and is wrapped by the water-blocking tape. The optical cable is light in weight and easy to construct, does not damage the human body or environment and has remarkable economy and practicability. The full-dry optical cable system comprises the full-dry optical cable and is light in weight and easy to construct, does not damage the human body or environment and has remarkable economy and practicability.

### SUMMARY OF THE INVENTION

A technical problem to be solved by the present invention is to provide a micro-bundle tube of a cable, to overcome the challenge of achieving both strength and flexibility within a cable. The micro-bundle tube can achieve the purpose of rapid stripping and rapid connection while certain strength is maintained, which makes it very suitable for use in environments with higher requirements for cable strength.

In order to solve the above technical problem, the present invention provides a micro-bundle tube of a cable, including a tube body which is consisting of a first tube section and a second tube section, the first tube section and the second tube section are seamlessly connected along the circumferential direction of the tube body and integrally molded.

The material of the first tube section includes the following components: 30 to 50 parts by weight of a polyester block copolymer, 1 to 18 parts by weight of a macromolecular additive, 2 to 8 parts by weight of dioctyl phthalate and 1 to 5 parts by weight of hydroquinone; the macromolecular additive is a mixture of any two of an ethylene-vinyl acetate copolymer, an ethylene-methyl acrylate copolymer and an epoxy compound.

The material of the second tube section includes the following components: 40 to 65 parts by weight of polybutylene terephthalate, 3 to 8 parts by weight of butyl benzyl phthalate, and 1 to 5 parts by weight of p-phenylenediamine or hydroquinone.

In one preferred embodiment of the present invention, the macromolecular additive is a mixture of the ethylene-vinyl acetate copolymer and the ethylene-methyl acrylate copolymer, and the ethylene-vinyl acetate copolymer and the ethylene-methyl acrylate copolymer have a molar ratio of 1: 2.

In one preferred embodiment of the present invention, the macromolecular additive is a mixture of the ethylene-vinyl acetate copolymer and the epoxy compound, and the ethylene-vinyl acetate copolymer and the epoxy compound have a molar ratio of 1: 2.

In one preferred embodiment of the present invention, the macromolecular additive is a mixture of the ethylene-methyl acrylate copolymer and the epoxy compound, and the ethylene-methyl acrylate copolymer and the epoxy compound have a molar ratio of 1: 1.

In one preferred embodiment of the present invention, a hard segment region of the polyester block copolymer is polymerized by a polycondensation reaction of a polyester polyol and a polyisocyanate; and a soft segment region of the polyester block copolymer is polymerized by hexanediol or isopentyldiol with a polyisocyanate.

In one preferred embodiment of the present invention, the micro-bundle tube is formed by a molding process comprising:
Step 1: weighing the material of the first tube section: 30 to 50 parts by weight of a polyester block copolymer, 1 to 18 parts by weight of a macromolecular additive, 2 to 8 parts by weight of dioctyl phthalate, and 1 to 5 parts by weight of hydroquinone; weighing the material of the second tube section: 40 to 65 parts by weight of polybutylene terephthalate, 3 to 8 parts by weight of butyl benzyl phthalate, and 1 to 5 parts by weight of p-phenylenediamine or hydroquinone;
Step 2: extrusion molding: placing the material of the first tube section into the first extruder, and placing the material of the second tube section into the second extruder; the discharges from the first extruder and the second extruder both flowing into a tube drawing mould to forma tapered fluid at the outlet of the drawing tube mould, and generating a hollow tube body by stretching and cooling, wherein the tube drawing mould has a draw ratio of 7-9, the first tube section and the second tube section are seamlessly connected along the circumferential direction of the tube body.

In one preferred embodiment of the present invention, the molding process also includes applying a grease having a viscosity of 4000-6000 mPa·s to an inner wall of the tube body after the molding of the tube body.

In order to solve the above technical problem, the present invention also provides a micro-bundle tube cable including a cable core, the cable core includes an optical fiber unit and the above micro-bundle tube, and the optical fiber unit is tightly sleeved within the micro-bundle tube.

In one preferred embodiment of the present invention, the optical fiber unit contains a plurality of optical fibers, and a fiber paste is filled between the optical fibers in the micro-bundle tube.

In one preferred embodiment of the present invention, the micro-bundle tube cable also includes a water blocking layer and a sheath layer, the water blocking layer is covered on the outer surface of the cable core, and the sheath layer is covered on the outer surface of the water blocking layer. The water blocking layer is a dry water blocking layer made of yarns or a non-woven fabric; the sheath layer is a polyethylene sheath layer or a low-smoke halogen-free sheath layer.

As compared with the prior art, the present invention has the following technical benefits: a micro-bundle tube of a cable is provided in the invention to overcome the challenge of achieving both strength and flexibility within a cable, and the micro-bundle tube can achieve the purpose of rapid stripping and rapid connection while a certain strength is ensured, which makes it very suitable for use in environments with higher requirements for cable strength.

The micro-bundle tube of a cable of the present invention has the following technical advantages:
First, the micro-bundle tube has a first tube section and a second tube section that are integrally molded. The first tube section and the second tube section are seamlessly connected along the circumferential direction of the tube body. The first tube section of specific components of the invention has a good flexibility after being molded and is easy to be peeled off, especially the polyester block copolymer has inherent advantages of good elasticity and softness. The first tube section can be prepared with a minimum bending diameter of 15mm. The micro-bundle tube can be quickly peeled off from the first tube section to achieve the purpose of rapid connection. The second tube section of specific components of the invention has a good strength and abrasion-resistance after being molded, especially the polybutylene terephthalate has a strong inherent advantage, which can ensure the overall strength of the micro-bundle tube cable is not reduced when the micro-bundle tube is peeled off. All these are used to overcome the challenge of achieving both strength and flexibility simultaneously within a cable.

Second, a macromolecular additive in a special ratio is added to the material of the first tube section, which can effectively increase the flexibility and processability of the polyester block copolymer, reduce the surface tension and processing heat, improve the compatibility between matrix (the polyester block copolymer) and the additive, avoid precipitating and accumulating of the additive at the outlet of the mould, thereby solving the unexpected problems of the tube wall of the micro-bundle tube caused by the precipitation and accumulation of the additive at the outlet of the mould.

### BRIEF DESCRIPTION OF THE DRAWINGS

Fig.1 is a sectional view of the micro-bundle tube of a cable according to a preferred embodiment of the present invention;
Fig.2 is a sectional view of a micro-bundle tube cable according to a preferred embodiment of the present invention;

### Reference Numbers:

2-a micro-bundle tube, 21- a first tube section, 22- a second tube section, 6-a optical fiber, 8-a water blocking layer, 10-a sheath layer.

### DETAILED DESCRIPTION OF THE PREFERRED EMBODIMENTS

The present invention will be further described below with reference to the accompanying drawings and specific embodiments, thereby those skilled in the art can better understand the present invention and implement it, but the embodiments are not intended to limit the present invention.

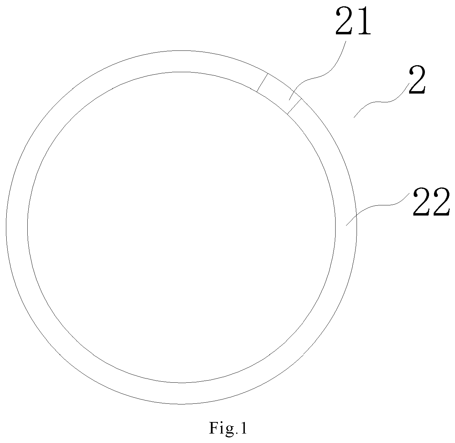

As shown in FIG.1, this embodiment provides a micro-bundle tube of a cable, and the micro-bundle tube includes a tube body consisting of a first tube section 21 and a second tube section 22. The first tube section 21 and the second tube section 22 are integrally molded and seamlessly connected along the circumferential direction of the tube body.

The above micro-bundle tube is formed by a molding process including:
step 1, the materials of the first tube section and the second tube sections are weighed respectively;
step 2: extrusion molding: the material of the first tube section is placed into a first extruder, and the material of the second tube section is placed into a second extruder; the discharges from the first extruder and the second extruder both flow into a tube drawing mould with a draw ratio of 7-9 to form a tapered fluid at the outlet of the drawing tube mould, and a hollow tube body is generated by stretching and cooling, wherein the first tube section and the second tube section are seamlessly connected along the circumferential direction of the tube body;
step 3: a grease having a viscosity of 4000-6000 mPa·s is applied to the inner wall of the tube body after the molding of the tube body.

### Example 1-Example 3

In Example 1 to Example 3, the material components of the first tube section and the second tube section are shown in the Table 1.

**Table 1 Material components of the first tube section and the second tube section**

| | | EXAMPLE 1 | EXAMPLE 2 | EXAMPLE 3 |
|---|---|---|---|---|
| The first tube section | Block copolymer | 30 | 40 | 50 |
| | Ethylene-vinyl acetate copolymer | 1 | 10 | 18 |
| | Ethylene-methyl acrylate copolymer | | | |
| | Dioctyl phthalate | 2 | 5 | 8 |
| | Hydroquinone | 1 | 3 | 5 |
| The second tube section | Polybutylene terephthalate | 40 | 52 | 65 |
| | Butyl benzyl phthalate | 3 | 5 | 8 |
| | p-phenylenediamine | 1 | 0 | 5 |
| | Hydroquinone | 0 | 3 | 0 |

In Example 1 to Example 3, the mixture of the ethylene-vinyl acetate copolymer and the ethylene-methyl acrylate copolymer accounts for 1 part, 10parts and 18 parts by weight respectively, and the ethylene-vinyl acetate copolymer and the ethylene-methyl acrylate copolymer have a molar ratio of 1: 2.

In Example 1 to Example 3, a hard segment region of the polyester block copolymer is polymerized by a polycondensation reaction of a polyester polyol and a polyisocyanate; and a soft segment region of the polyester block copolymer is polymerized by hexanediol or isopentyldiol with a polyisocyanate.

### Example 4 -Example 6

In Example 4 to Example 6, the material components of the first tube section and the second tube section are shown in the Table 2.

**Table 2 Material components of the first tube section and the second tube section**

| | | EXAMPLE 4 | EXAMPLE 5 | EXAMPLE 6 |
|---|---|---|---|---|
| The first tube section | Block copolymer | 30 | 40 | 50 |
| | Ethylene-vinyl acetate copolymer | 1 | 10 | 18 |
| | Epoxy compound | | | |
| | Dioctyl phthalate | 2 | 5 | 8 |
| | Hydroquinone | 1 | 3 | 5 |
| The second tube section | Polybutylene terephthalate | 40 | 52 | 65 |
| | Butyl benzyl phthalate | 3 | 5 | 8 |
| | p-phenylenediamine | 1 | 0 | 5 |
| | Hydroquinone | 0 | 3 | 0 |

In Example 4 to Example 6, the mixture of the ethylene-vinyl acetate copolymer and the epoxy compound accounts for 1 part, 10 parts and 18 parts by weight respectively, and the ethylene-vinyl acetate copolymer and the epoxy compound have a molar ratio of 1: 2.

In Example 4 to Example 6, a hard segment region of the polyester block copolymer is polymerized by a polycondensation reaction of a polyester polyol and a polyisocyanate; and a soft segment region of the polyester block copolymer is polymerized by hexanediol or isopentyldiol with a polyisocyanate.

### Embodiment 7 - Embodiment 9

In Example 7 to Example 9, the material components of the first tube section and the second tube section are shown in the Table 3.

**Table 3 Material components of the first tube section and the second tube section**

| | | EXAMPLE 7 | EXAMPLE 8 | EXAMPLE 9 |
|---|---|---|---|---|
| The first tube section | Block copolymer | 30 | 40 | 50 |
| | Ethylene-methyl acrylate copolymer | 1 | 10 | 18 |
| | Epoxy compound | | | |
| | Dioctyl phthalate | 2 | 5 | 8 |
| | Hydroquinone | 1 | 3 | 5 |
| The second | Polybutylene terephthalate | 40 | 52 | 65 |
| Tube section | Butyl benzyl phthalate | 3 | 5 | 8 |
| | p-phenylenediamine | 1 | 0 | 5 |
| | Hydroquinone | 0 | 3 | 0 |

In Example 7 to Example 9, the mixture of the ethylene-methyl acrylate copolymer and the epoxy compound accounts for 1 part, 10 parts and 18 parts by weight respectively, and the ethylene-methyl acrylate copolymer and the epoxy compound have a molar ratio of 1: 1.

In Example 7 to Example 9, a hard segment region of the polyester block copolymer is polymerized by a polycondensation reaction of a polyester polyol and a polyisocyanate; and a soft segment region of the polyester block copolymer is polymerized by hexanediol or isopentyldiol with a polyisocyanate.

### EXAMPLE 10

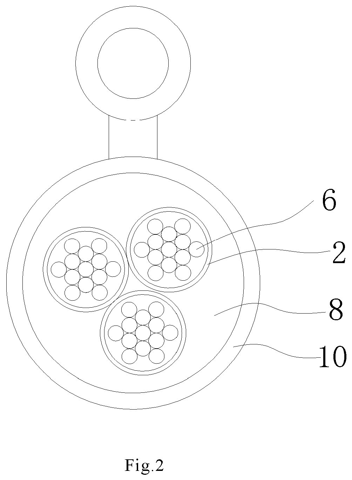

As shown in FIG. 2, this embodiment discloses a micro-bundle tube cable, which includes a cable core, a water blocking layer 8 is covered on the outer surface of the cable core, and a sheath layer 10 is covered on the outer surface of the water blocking layer 8. The cable core includes an optical fiber unit and the micro-bundle tube 2 produced in any one of the above Example 1 to Example 9. The optical fiber unit is tightly sleeved within the micro-bundle tube 2 and contains a plurality of optical fibers 6. A fiber paste is filled between the optical fibers 6 in the micro-bundle tube 2. The water-blocking layer 8 is a dry water-blocking layer. The material of the dry water-blocking layer is yarn or non-woven fabric. The sheath layer 10 is a polyethylene sheath layer or a low-smoke halogen-free sheath layer.

The above description is only preferred embodiments of the present invention and not intended to limit the present invention, it should be noted that those of ordinary skill in the art can further make various modifications and variations without departing from the technical principles of the present invention, and these modifications and variations also should be considered to be within the scope of protection of the present invention.

## Claims

1. A micro-bundle tube (2) for a cable comprising a tube body, wherein the tube body consists of a first tube section (21) and a second tube section (22), the first tube section (21) and the second tube section (22) are seamlessly connected along the circumferential direction of the tube body and integrally molded;
wherein a material formula of the first tube section (21) comprises 30 to 50 parts by weight of a polyester block copolymer, 1 to 18 parts by weight of a macromolecular additive, 2 to 8 parts by weight of dioctyl phthalate and 1 to 5 parts by weight of hydroquinone; the macromolecular additive includes a mixture of any two of an ethylene-vinyl acetate copolymer, an ethylene-methyl acrylate copolymer and an epoxy compound; and
a material formula of the second tube section (22) comprises 40 to 65 parts by weight of polybutylene terephthalate, 3 to 8 parts by weight of benzyl butyl phthalate, and 1 to 5 parts by weight of p-phenylenediamine or hydroquinone.

2. The micro-bundle tube (2) for a cable according to claim 1, wherein a hard segment region of the polyester block copolymer is polymerized by a polycondensation reaction of a polyester polyol and a polyisocyanate; and a soft segment region of the polyester block copolymer is formed by a polymerization of hexanediol or isopentyldiol with a polyisocyanate.

3. A molding process for forming micro-bundle tube comprising:
Step 1: weighing a material for a first tube section (21): 30 to 50 parts by weight of the polyester block copolymer, 1 to 18 parts by weight of a macromolecular additive, 2 to 8 parts by weight of dioctyl phthalate, and 1 to 5 parts by weight of hydroquinone; weighing a material for a second tube section (22): 40 to 65 parts by weight of polybutylene terephthalate, 3 to 8 parts by weight of butyl benzyl phthalate, and 1 to 5 parts by weight of p-phenylenediamine or hydroquinone;
Step 2: extrusion molding:
placing the material of the first tube section (21) into the first extruder,
placing the material of the second tube section (22) into the second extruder;
discharging the materials from the first extruder and the second extruder into a tube drawing mould,
forming a tapered fluid at an outlet of the tube drawing mould,
and forming a hollow tube body by stretching and cooling,
wherein the tube drawing mould has a draw ratio of 7-9, and the first tube section (21) and the second tube section (22) are seamlessly connected along a circumferential direction of the tube body.

4. A micro-bundle tube (2) for a cable formed by a molding process according to claim 3.

5. A micro-bundle tube cable comprising a cable core, wherein the cable core comprises an optical fiber unit and a micro-bundle tube according to claim 1, which is formed by applying a molding process according to claim 3, and the optical fiber unit is tightly sleeved within the micro-bundle tube (2).

6. The micro-bundle tube cable according to claim 5, wherein the optical fiber unit has a plurality of optical fibers (6), and a fiber paste is filled between the optical fibers (6) in the micro-bundle tube (2).

7. The micro-bundle tube (2) cable according to claim 5 or 6, wherein the cable further comprises a water blocking layer (8) and a sheath layer (10), the water blocking layer (8) is covered on the outer surface of the cable core, and the sheath layer (10) is covered on the outer surface of the water blocking layer (8); wherein the water blocking layer (8) is a dry water blocking layer, which comprises a yarn or a non-woven fabric; the sheath layer (10) is a polyethylene sheath layer (10) or a low-smoke halogen-free sheath layer (10).

## Patentansprüche

1. Mikrobündelschlauch (2) für ein Kabel, der einer Schlauchkörper umfasst, wobei der Schlauchkörper aus einem ersten Schlauchabschnitt (21) und einem zweiten Schlauchabschnitt (22) besteht, der erste Schlauchabschnitt (21) und der zweite Schlauchabschnitt (22) entlang der Umfangsrichtung des Schlauchkörpers nahtlos verbunden und einstückig geformt sind;
wobei die Materialzusammensetzung des ersten Schlauchabschnitts (21) 30 bis 50 Gewichtsteile eines Polyester-Blockcopolymers, 1 bis 18 Gewichtsteile eines makromolekularen Additivs, 2 bis 8 Gewichtsteile Dioctylphthalat und 1 bis 5 Gewichtsteile Hydrochinon umfasst; das makromolekulare Additiv eine Mischung aus zwei beliebigen folgenden Komponenten umfasst: einem EthylenVinylacetat-Copolymer, einem Ethylen-Methylacrylat-Copolymer und einer Epoxidverbindung; und
die Materialzusammensetzung des zweiten Schlauchabschnitts (22) 40 bis 65 Gewichtsteile Polybutylenterephthalat, 3 bis 8 Gewichtsteile Benzylbutylphthalat und 1 bis 5 Gewichtsteile p-Phenylendiamin oder Hydrochinon umfasst.

2. Mikrobündelschlauch (2) für ein Kabel nach Anspruch 1, wobei ein harter Segmentbereich des Polyester-Blockcopolymers durch eine Polykondensationsreaktion eines Polyesterpolyols und eines Polyisocyanats polymerisiert wird; und ein weicher Segmentbereich des Polyester-Blockcopolymers durch eine Polymerisation von Hexandiol oder Isopentyldiol mit einem Polyisocyanat gebildet wird.

3. Arnolding-Verfahren zum Formen eines Mikrobündelschlauchs, umfassend:
Schritt 1: Abwiegen eines Materials für einen ersten Schlauchabschnitt (21): 30 bis 50 Gewichtsteile des Polyester-Blockcopolymers, 1 bis 18 Gewichtsteile eines makromolekularen Additivs, 2 bis 8 Gewichtsteile Dioctylphthalat und 1 bis 5 Gewichtsteile Hydrochinon; Abwiegen eines Materials für einen zweiten Schlauchabschnitt (22): 40 bis 65 Gewichtsteile Polybutylenterephthalat, 3 bis 8 Gewichtsteile Butylbenzylphthalat und 1 bis 5 Gewichtsteile p-Phenylendiamin oder Hydrochinon;
Schritt 2: Extrusionsformen:
Einbringen des Materials des ersten Schlauchabschnitts (21) in den ersten Extruder,
Einbringen des Materials des zweiten Schlauchabschnitts (22) in den zweiten Extruder;
Austragen der Materialien aus dem ersten Extruder und dem zweiten Extruder in eine Schlauchziehform,
Bilden eines konischen Fluids am Auslass der Schlauchziehform,
und Formen eines hohlen Schlauchkörpers durch Strecken und Abkühlen,
wobei die Schlauchziehform ein Ziehverhältnis von 7 bis 9 aufweist und der erste Schlauchabschnitt (21) und der zweite Schlauchabschnitt (22) entlang der Umfangsrichtung des Schlauchkörpers nahtlos verbunden sind.

4. Mikrobündelschlauch (2) für ein Kabel, der durch ein Formverfahren nach Anspruch 3 geformt ist.

5. Mikrobündelschlauchkabel besteht aus einem Kabelkern, wobei der Kabelkern eine Glasfasereinheit und ein Mikrobündelschlauch nach Anspruch 1 umfasst, der durch ein Formverfahren nach Anspruch 3 geformt ist und die Glasfasereinheit dicht in den Mikrobündelschlauch (2) eingefasst ist.

6. Mikrobündelschlauchkabel nach Anspruch 5, wobei die Glasfasereinheit mehrere Glasfasern (6) aufweist und zwischen den Glasfasern (6) im Mikrobündelschlauch (2) eine Faserpaste eingefüllt ist.

7. Mikrobündelschlauchkabel (2) nach Anspruch 5 oder 6 , wobei das Kabel ferner eine wasserabweisende Lage (8) und eine Mantellage (10) umfasst, die wasserabweisende Lage (8) auf der Außenfläche des Kabelkerns und die Mantellage (10) auf der Außenfläche der wasserabweisenden Lage (8) aufgebracht ist; wobei die wasserabweisende Lage (8) eine trockene wasserabweisende Lage ist, die aus einem Garn oder einem Vlies besteht; die Mantellage (10) eine Polyethylen-Mantellage (10) oder eine halogenfreie Mantellage mit geringer Rauchentwicklung (10) ist.

## Revendications

1. Tube micro-faisceau (2) pour un câble comprenant un corps de tube, **caractérisé en ce que** ledit corps de tube est constitué d'une première section de tube (21) et d'une deuxième section de tube (22), la première section de tube (21) et la deuxième section de tube (22) étant connectées sans soudure le long de la direction circonférentielle du corps de tube et moulées en une seule pièce ;
**caractérisé en ce qu'**une formule du matériau de la première section de tube (21) comprend 30 à 50 parties en poids d'un copolymère séquencé de polyester, 1 à 18 parties en poids d'un additif macromoléculaire, 2 à 8 parties en poids de phtalate de dioctyle et 1 à 5 parties en poids d'hydroquinone, ledit additif macromoléculaire comprenant un mélange de deux quelconques parmi un copolymère éthylène-acétate de vinyle, un copolymère éthylène-acrylate de méthyle et un composé époxy ; et
une formule du matériau de la deuxième section de tube (22) comprend 40 à 65 parties en poids de polybutylène téréphtalate, 3 à 8 parties en poids de phtalate de benzyle et de butyle et 1 à 5 parties en poids de para-phénylènediamine ou d'hydroquinone.

2. Tube micro-faisceau (2) pour un câble selon la revendication 1, **caractérisé en ce qu'**une région de segment dur dudit copolymère séquencé de polyester est polymérisée par réaction de polycondensation d'un polyol de polyester et d'un polyisocyanate ; et une région de segment souple dudit copolymère séquencé de polyester est formée par polymérisation d'hexanediol ou d'isopentyldiol avec un polyisocyanate.

3. Procédé Arnolding pour la formation d'un tube micro-faisceau, comprenant :
Étape 1 : peser un matériau pour une première section de tube (21) comprenant 30 à 50 parties en poids d'un copolymère séquencé de polyester, 1 à 18 parties en poids d'un additif macromoléculaire, 2 à 8 parties en poids de phtalate de dioctyle et 1 à 5 parties en poids d'hydroquinone ; peser un matériau pour une deuxième section de tube (22) comprenant 40 à 65 parties en poids de polybutylène téréphtalate, 3 à 8 parties en poids de phtalate de benzyle et de butyle et 1 à 5 parties en poids de para-phénylènediamine ou d'hydroquinone ;
Étape 2 : moulage par extrusion :
introduire le matériau de la première section de tube (21) dans une première extrudeuse,
introduire le matériau de la deuxième section de tube (22) dans une deuxième extrudeuse ;
extruder les matériaux depuis la première et la deuxième extrudeuse dans un moule d'étirage de tubes,
former un fluide conique à la sortie du moule d'étirage de tubes,
et former un corps de tube creux par étirage et refroidissement,
**caractérisé en ce que** le moule d'étirage de tube présente un taux d'étirage de 7 à 9, et la première section de tube (21) et la deuxième section de tube (22) sont connectées sans soudure le long de la direction circonférentielle du corps de tube.

4. Tube micro-faisceau (2) pour câble, formé par un procédé de moulage selon la revendication 3.

5. Câble à tube micro-faisceau, comprenant une âme de câble, **caractérisé en ce que** ladite âme de câble comprend une unité de fibre optique et un tube micro-faisceau selon la revendication 1, ledit tube micro-faisceau étant formé par un procédé de moulage selon la revendication 3 et ladite unité de fibre optique étant étroitement gainée à l'intérieur dudit tube micro-faisceau (2).

6. Câble à tube micro-faisceau selon la revendication 5, **caractérisé en ce que** l'unité de fibre optique comprend une pluralité de fibres optiques (6), et une pâte fibreuse est remplie entre lesdites fibres optiques (6) dans le tube micro-faisceau (2).

7. Câble à tube micro-faisceau (2) selon la revendication 5 ou 6, **caractérisé en ce que** le câble comprend en outre une couche anti-humidité (8) et une couche de gaine (10), ladite couche anti-humidité (8) recouvrant la surface externe de l'âme de câble et ladite couche de gaine (10) recouvrant la surface externe de la couche anti-humidité (8) ; **caractérisé en ce que** la couche anti-humidité (8) est une couche anti-humidité sèche comprenant un filé ou un non-tissé, et la couche de gaine (10) est une couche de gaine en polyéthylène (10) ou une couche de gaine sans halogène à faible dégagement de fumée (10).
